# EUROPÄISCHE PATENTSCHRIFT

(11) **EP 2 958 782 B1**
(45) Veröffentlichungstag und Bekanntmachung des Hinweises auf die Patenterteilung: **23.11.2016**
(21) Anmeldenummer: 14702454.1
(22) Anmeldetag: 01.02.2014
(51) Int. Cl.: B60W 20/00, B60W 10/08, B60W 50/08

(54) **VERFAHREN ZUM BETRIEB EINES KRAFTFAHRZEUGS MIT HYBRIDANTRIEB**
METHOD FOR OPERATING A VEHICLE WITH HYBRID DRIVE
PROCÉDÉ DE FONCTIONNEMENT D'UN VEHICULE AVEC PROPULSION HYBRIDE

(30) Priorität: 25.02.2013 DE 102013003143
(43) Veröffentlichungstag der Anmeldung: 30.12.2015
(73) Patentinhaber: Audi AG, 85045 Ingolstadt (DE)
(72) Erfinder: LIMBACHER, Reimund, 85055 Ingolstadt (DE); HAHNE, Oliver, 91171 Greding (DE)
(86) Internationale Anmeldenummer: PCT/EP2014/000264
(87) Internationale Veröffentlichungsnummer: WO 2014/127884

(56) Entgegenhaltungen:
- EP-A1- 2 546 496
- DE-A1- 19 718 709
- DE-A1-102007 035 424
- DE-A1-102009 026 788

## Beschreibung

Verfahren zum Betrieb eines Kraftfahrzeugs mit Hybridantrieb umfassen einen Verbrennungsmotor und eine Elektromaschine mit zugeordnetem Energiespeicher, der in einem Lademodus bei generatorischem Betrieb der Elektromaschine aufladbar ist, sowie ein elektronisch schaltbares Getriebe, dessen Gänge durch Betätigen eines Wählelements manuell herauf- und herunterschaltbar sind.

Kraftfahrzeuge mit Hybridantrieb erfreuen sich zunehmender Beliebtheit. Zu unterscheiden sind sogenannte Full-Hybrid-Fahrzeuge, deren Energiespeicher, also deren Batterie ausschließlich über die generatorisch betriebene Elektromaschine aufgeladen werden, und sogenannte Plug-In-Hybrid-Fahrzeuge, die zusätzlich die Möglichkeit bieten, den Energiespeicher über einen handelsüblichen Steckdosenanschluss aufzuladen. Beiden ist gemein, dass sie so ausgelegt sind, dass es einerseits einen hybridischen Betriebsmodus und einen rein elektrischen Betriebsmodus gibt. Im hybridischen Modus läuft überwiegend der Verbrennungsmotor, die Elektromaschine, dann als Elektromotor betrieben, kann unterstützend antreiben, beispielsweise eine zusätzliche Beschleunigung bieten (Boosten), oder der Lastpunktabsenkung dienen. Alternativ kann die Elektromaschine im hybridischen Modus auch generatorisch betrieben werden und entweder rekuperieren, also den Energiespeicher (Traktionsbatterie) aufladen, oder sie kann den Lastpunkt des Verbrennungsmotors anheben. Während also im generatorischem Betrieb während der Fahrt die Traktionsbatterie wieder aufgeladen werden kann, wird die Traktionsbatterie im reinen elektrischen Betriebsmodus überwiegend entladen.

Vornehmlich bei Plug-In-Hybrid-Fahrzeugen mit relativ großem Energiespeicher wird als Default-Zustand nach dem Einsteigen und Aktivieren des Fahrzeugs meist der rein elektrische Betriebsmodus festgelegt, d. h., dass das Fahrzeug nach Abfahrt überwiegend elektrisch fährt, bis der Energiespeicher entleert ist. Um dem Fahrer die Möglichkeit zu geben, während der Fahrt den Energiespeicher über den Verbrennungsmotor zügig aufzuladen kann ein Lademodus als Sonderform des hybridischen Betriebsmodus vom Fahrer angewählt werden. In diesem Lademodus treibt der Verbrennungsmotor in allen Schwach- und Teillastphasen die dann als Generator betriebene Elektromaschine mit an, es kommt zu einer gewissen Lastpunktanhebung. Die Auswahl dieses Lademodus erfolgt durch den Fahrer, und zwar entweder durch Betätigen einer separaten Bedientaste, die nur für diesen Fall vorgesehen ist, oder durch Anwahl eines Menüpunktes in einem Eingabemenü an einem Display.

Diese Art der Auswahl des Lademodus macht jedoch den Einbau und die Betätigung einer zusätzlichen Taste im Fahrzeug erforderlich, was zu Mehrkosten führt und für den Fahrer mitunter unbequem ist. Auch die Anwahl eines zusätzlich zu konfigurierenden Menüpunktes in einem Eingabemenü ist umständlich, das Eingabemenü kann hierdurch zu komplex respektive schwer verständlich werden.

DE 197 18 709 A1 zeigt ein Steuerungsverfahren eines Hybridfahrzeugs, bei dem die Antriebs- bzw. Bremskraft eines Elektromotors zur Antriebs- bzw. Bremskraft eines Hybridfahrzeugs derart hinzugegeben wird, dass eine Änderung der Antriebs- bzw. Bremskraft bei einem Schaltvorgang verhindert wird. Dadurch lässt sich ein Schaltruck, der durch den Schaltvorgang ausgelöst würde, verhindern.

DE 10 2009 026 788 A1 beschreibt ein Kraftfahrzeug umfassend einen Hybridantrieb, bei dem zwischen den Hybridantrieb und einen Abtrieb ein automatisches bzw. automatisiertes Getriebe geschaltet ist, bei dem mittels eines Fahrbedienelements mehrere Fahrzustände anwählbar sind.

Der Erfindung liegt damit das Problem zugrunde, ein Verfahren anzugeben, das einen vereinfachten Wechsel in den Lademodus ermöglicht.

Zur Lösung dieses Problems ist bei einem Verfahren der eingangs genannten Art erfindungsgemäß vorgesehen, dass die Elektromaschine in den Lademodus geschaltet wird, wenn über das Wählelement durch wenigstens einmaliges Betätigen ein niedrigerer Gang oder ein infolge eines Gangwechsels zu einer höheren Drehzahl führender anderer Schaltmodus eines Getriebesteuergeräts angewählt wird und nach erfolgter Gangwahl oder Schaltmoduswahl die Beschleunigung des Kraftfahrzeugs durch Betätigung des Fahrpedals nicht oder nur in einem vorbestimmten Maß geändert wird.

Der Erfindung liegt Überlegung zugrunde, den Wechsel in den Lademodus an eine bereits vorhandene Funktion respektive einen vorhandenen Bedienvorgang zu koppeln. Für einen Wechsel müssen zwei Randbedingungen erfüllt sein. Zum einen muss durch Betätigung des auf das Getriebesteuergerät wirkenden Wählelements, also beispielsweise des Fahrstufenwählhebels, der im Rahmen einer "Tiptronic"-Funktion auch einzelne Getriebegänge manuell schalten kann, ein Gangswechsel zu einem niedrigeren Gang gewählt werden, alternativ kann dies auch durch Betätigen eines Schaltpaddels am Lenkrad erfolgen. In jedem Fall verbunden ist damit eine Drehzahlerhöhung. Diese kann auch erreicht werden, wenn über den Fahrstufenwählhebel beispielsweise vom der D-Fahrstufe in die S-Fahrstufe gewechselt wird, auch hierbei kommt es zu einer Drehzahlerhöhung. Da den meisten Fahrern geläufig ist, dass eine entladene 12-V-Batterie eines Fahrzeugs durch Anhebung der Motordrehzahl schneller wieder aufgeladen werden kann, was beispielsweise der Fahrer durch Gas geben im Leerlauf oder durch Fahren in einem niedrigen Gang bewusst vornimmt, ist davon auszugehen, dass mit einer erhöhten Motordrehzahl und damit auch mit einem aktiven Herunterschalten grundsätzlich eine Bedienfunktion gegeben ist, die leicht mit der Erwartungshaltung des Ladens einer Traktionsbatterie in Eingang gebracht werden kann und damit für den Fahrer intuitiv verständlich ist. Die andere Randbedingung ist, dass das Herunterschalten respektive der Moduswechsel nicht mit einer unmittelbar danach folgenden Leistungsanforderung verbunden ist, dass der Fahrer unmittelbar nach dem Schalten oder Moduswechsel also nicht oder nicht übermäßig stark beschleunigt. Die zweite Randbedingung ist folglich, dass der Fahrer das Fahrpedal nicht oder nur in einem vorbestimmten Maß betätigt, mithin also das Fahrzeug entweder gar nicht oder nur sanft beschleunigt und folglich keine hohe Leistung gefordert wird, die durch Umschalten der Elektromaschine in den Generatorbetrieb mit der daraus sich ergebenden Lastpunkterhöhung in dem gewünschten Umfang nicht geliefert werden könnte.

Schaltet der Fahrer also manuell über das Wählelement einen Gang herunter und wird die gegebene Beschleunigung anschließend beibehalten, so wird dies als Signalisierung eines Batterieladewunsches interpretiert bzw. sind zwei Randbedingungen erfüllt, die einen Wechsel in den Lademodus ermöglichen. Dieser Batterieladewunsch kann nun durch Fahren im Schwach- oder Teillastbereich durch Umschalten der Elektromaschine in den Generatorbetrieb verbunden mit einer geringen Lastpunktanhebung, die hier jedoch nicht nachteilig ist, als keine erhöhte Leistung zur Verfügung gestellt werden muss, umgesetzt werden kann.

Dieser Wechsel in den generatorischen Betrieb erfolgt jedoch nicht, wenn der Fahrer unmittelbar nach dem Herunterschalten oder dem Moduswechsel stark Gas gibt, da dann klar ist, dass das Herunterschalten nur zum Zwecke der Änderung des Drehzahlbereichs und eine Verschiebung des Leistungsbereichs erfolgt.

Eine entsprechende Umschaltung erfolgt auch, wenn der Fahrer im Schubbetrieb, wenn er also das Fahrpedal nicht betätigt, in einen niedrigeren Gang wechselt oder den Schaltmodus ändert. Wird nun auf Generatorbetrieb umgeschaltet, so ergibt sich durch die Anhebung der Schleppverzögerung auch die Rekuperationsleistung, was erwartungskonform auch zu einer Erhöhung der Batterieladung führt.

Der Wechsel in den generatorischen Betrieb wird in jedem Fall sofort dann wieder umgekehrt, wenn der Fahrer beschleunigt, also das Fahrpedal betätigt. Die Lastpunktanhebung, resultierend aus dem Umschalten in den Generatorbetrieb wird unterbrochen, um die maximale Beschleunigung, wie gewünscht, zu ermöglichen. Die Elektromaschine wird folglich wieder in den Motorbetrieb geschaltet respektive wird zumindest entkoppelt, so dass sie nicht mehr lastpunktanhebend wirkt.

Denkbar ist es ferner, für ein Schalten der Elektromaschine in den Generatorbetrieb das Wählelement zweimal kurz hintereinander zu betätigen, wobei ein Herunterschalten um einen weiteren Gang zunächst unterdrückt wird. Um die Lastpunktanhebung durchzuführen, mithin also die Elektromaschine als Generator schalten, muss über den Wählhebel im "Tiptronic"-Modus zweimal kurz hintereinander der Herunterschaltwunsch gegeben werden, alternativ über das entsprechende Paddel. Einerseits wird über das erste Schalten der Gang heruntergeschaltet, das zweite Schalten dient der Signalisierung, dass ein Batterieladewunsch gegeben ist, um einen zweiten Gang wird dann nicht heruntergeschaltet. Wird jedoch unmittelbar nach dem zweimaligen Betätigen Gas gegeben, oder gegebenenfalls parallel dazu, so wird hieraus erkannt, dass kein Ladewunsch gegeben ist, viel mehr wird dann um zwei Gangstufen runtergeschaltet. Hierüber ist also eine Unterscheidung möglich, ob durch zweimaliges Betätigen des Wählelements ein Ladewunsch gegeben ist, oder ob ein Wunsch nach voller Beschleunigung gegeben ist.

Wird zweimal betätigt, ohne Gas zu geben, so kann ferner auch der Lastpunkt durch entsprechende Ansteuerung der als Elektromotor betriebenen Elektromaschine zum schnelleren Laden angehoben werden.

Wird durch Betätigen eines Schaltpaddels am Lenkrad der Gangwechsel vorgenommen, so geht üblicherweise das Getriebesteuergerät von einem automatischen Schaltmodus in einen manuellen Schaltmodus über, in dem solange das Getriebesteuergerät in diesem Modus ist, die Schaltstufen nur über die Schaltpaddels geschaltet werden können. Diesen Zustand verlässt das Getriebesteuergerät jedoch automatisch wieder, wenn für eine bestimmte Zeit, z. B. 5 - 10 s, das Schaltpaddel kein weiteres Mal betätigt wird. Erfindungsgemäß kann nun, wenn mit Betätigen des Schaltpaddels auch die Elektromaschine in den Generatorbetrieb geschaltet wurde, dieser Lademodus ebenfalls nur für diese vorbestimmte Zeit, die das Getriebesteuergerät im manuellen Schaltmodus ist, beibehalten werden. Mit Ablauf dieser vorbestimmten Zeit wird die Elektromaschine wieder in den Motorbetrieb geschaltet respektive wieder entkoppelt. D. h., dass der Energiespeicher nur inkrementell geladen wird. Will der Fahrer die Batterie stärker laden, so muss er mehrmals diese Schaltpaddel-Betätigung vornehmen, bis der gewünschte Ladezustand erreicht ist.

Denkbar ist es in diesem Zusammenhang, wenn das Wählelement zweimal zum Schalten zu betätigen ist, um die Elektromaschine in den Generatorbetrieb zu bringen, dass eine längere vorbestimmte Zeit eingestellt wird, als bei nur einmaliger, nur zum Herunterschalten des Gangs ausreichender Bestätigung des Wählelements. D. h., dass anstelle der nur 5 - 10 s andauernden Ladezeit in einem solchen Fall eine längere Zeit gewählt wird, während welcher der Ladezustand aufrechterhalten bleibt.

Die vorbestimmte Zeit sollte grundsätzlich wenigstens 20 s, vorzugsweise wenigstens 30 s, insbesondere wenigstens 60 s betragen. Alternativ hierzu kann auch keine Zeitbeschränkung im manuellen Schalt-Modus gegeben sein, d. h., dass solange geladen wird, wie im manuellen Schaltmodus gefahren wird und nicht wieder aktiv durch Betätigung eines Wählelements oder dergleichen in den automatischen Schaltmodus gewechselt wird. Solange also der heruntergeschaltete Gang eingelegt ist und damit gefahren wird, kann auch der Lademodus permanent beibehalten werden.

Wie ausgeführt, besteht die Möglichkeit, einen Ladewunsch durch zweimaliges Betätigen des Wählelements, sei es der Wählhebel oder sei es das Schaltpaddel, zu geben, verbunden mit nur einer heruntergeschalteten Gangstufe. Um dem Fahrer dennoch die Möglichkeit zu bieten, eine weitere Gangstufe herunterzuschalten und die Drehzahl noch höher zu bringen kann er hierfür das Wählelement oder insbesondere das Schaltpaddel ein drittes Mal betätigen. Diese dritte Betätigung wird dann zum Herunterschalten um den zweiten Gang führen.

Neben dem Verfahren betrifft die Erfindung ferner ein Kraftfahrzeug mit Hybridantrieb umfassend einen Verbrennungsmotor und eine Elektromaschine mit zugeordnetem Energiespeicher, der bei generatorischem Betrieb der Elektromaschine aufladbar ist, sowie ein elektronisch schaltbares Getriebe, dessen Gänge durch Betätigen eines Wählelements manuell herauf- und herunterschaltbar sind. Dieses Fahrzeug zeichnet sich dadurch aus, dass eine die Elektromaschine in ihrer Funktion umschaltende Steuerungseinrichtung vorgesehen ist, die zur Durchführung des zuvor beschriebenen Verfahrens ausgebildet ist. Das Steuergerät kommuniziert selbstverständlich über einen geeigneten Datenbus mit anderen Steuergeräten, um die Informationen bezüglich Gang- oder Moduswahl, also Betätigung des Wählelements, und bezüglich der Betätigung des Fahrpedals respektive eines Beschleunigungswunsches etc. zu bekommen, die benötigt werden, um zu ermitteln, ob die Randbedingungen für ein Umschalten des Betriebs der Elektromaschine ist, sei es in dem Generatorbetrieb, sei es im Motorbetrieb, erfüllt sind, oder nicht.

Weitere Vorteile, Merkmale und Einzelheiten der Erfindung ergeben sich aus dem im Folgenden beschriebenen Ausführungsbeispiel.

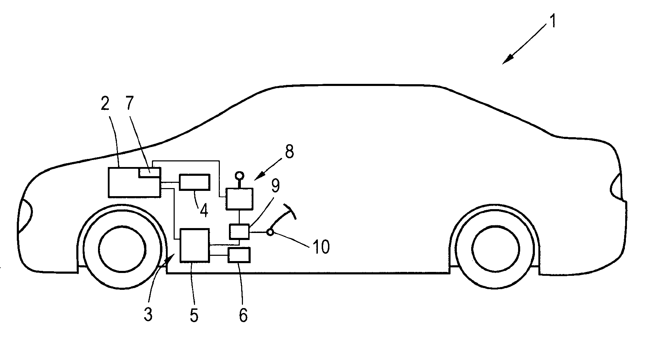

Die Figur zeigt ein erfindungsgemäßes Kraftfahrzeug 1, mit einem Getriebe 2, das in nicht näher gezeigter Weise mit der oder den anzutreibenden Achsen verbunden ist. Das Kraftfahrzeug 1 weist ferner einen Hybridantrieb 3 auf, umfassend einen Verbrennungsmotor 4, über den das Getriebe 2 angetrieben werden kann, sowie eine Elektromaschine 5, die als Elektromotor angetrieben werden kann und ebenfalls auf das Getriebe 2 wirkt. Der Elektromaschine 5 ist ein Energiespeicher 6, üblicherweise in Form einer Traktionsbatterie, zugeordnet, die, wenn die Elektromaschine 5 als Generator geschaltet ist und betrieben wird, über die Elektromaschine 5 geladen werden kann.

Das Getriebe 2 verfügt über ein Getriebesteuergerät 7, das das Getriebe 2 elektrisch schaltet respektive das auch selbst entsprechende Steuerbefehle von einem Wählelement 8 bekommt, über das letztlich der Funktions- respektive Schaltbetrieb des Getriebesteuergeräts 8 steuerbar ist.

Vorgesehen ist ferner ein Steuergerät 9, das dem Schalten der Elektromaschine 5 dient, mithin also definiert, ob die Elektromaschine 5 als Generator zum Aufladen des Energiespeichers 6 oder als Elektromotor zum Antreiben verwendet wird.

Um nun auf einfache Weise zu erfassen, ob grundsätzlich die Möglichkeit besteht, die Elektromaschine 5 als Generator zu betreiben respektive ob ein entsprechender Batterieladewunsch vorliegt, kommuniziert das Wählelement 8, bei dem es sich beispielsweise um den Fahrstufenwählhebel handeln kann, der im "Tiptronic"-Modus auch zum manuellen Schalten der einzelnen Getriebegänge betätigt werden kann, oder bei dem es sich um ein lenkradseitiges Schaltpaddel zum Herauf- oder Herunterschalten handeln kann, mit dem Steuergeräte 9. Dieses erfasst somit, ob ein entsprechender Schaltwunsch für einen Wechsel zu einem niedrigeren Gang gegeben wird. Ein solches Umschalten in einen niedrigeren Gang kann eine erste Randbedingung sein, gestützt auf welche die Elektromaschine 5 in den Generatorbetrieb geschaltet wird. Alternativ zum einzelnen Gangwechsel kann über das Wählelement 8, wenn es sich bei ihm um einen Wählhebel handelt, auch ein Fahrstufenwechsel von der D- auf die S-Fahrstufe gewählt werden. Wie auch bei einem einzelnen Gangwechsel ist dann mit einem Fahrstufenwechsel in dieser Form eine Drehzahlerhöhung verbunden. D. h., dass die erste Randbedingung, abhängig von welcher ein Umschalten der Elektromaschine erfolgen kann, eine Drehzahlerhöhung ist, die aktiv vom Fahrer durch Betätigen des Wählelements 8, sei es ein im "Tiptronic"-Modus in Richtung "-" betätigter Wählhebel, sei es ein im "Tiptronic"-Modus betätigtes Schaltpaddel in Richtung "-" initiiert wird.

Die zweite Randbedingung ist, dass unmittelbar nach einem solchen manuell und aktiv initiierten Gang- oder Schaltmoduswechsel keine Beschleunigung des Fahrzeugs vorgenommen wird, mithin also ein Fahrpedal 10 nicht betätigt wird oder maximal in einem Maß, dass kein übermäßiger Beschleunigungswunsch daraus abgeleitet werden kann. Verharrt das Fahrpedal 10 also beispielsweise in seiner Stellung trotz vorherigem Herunterschaltens, so wird dies als Ladewunsch interpretiert, das Steuergerät 9 schaltet sodann umgehend die Elektromaschine 5 in den Generatorbetrieb, woraufhin zwar einerseits der Lastpunkt etwas angehoben wird, dies jedoch nicht stört, da davon ausgegangen wird, dass ein Ladewunsch vorliegt und folglich der Energiespeicher 6 über die Elektromaschine 5 zu laden ist.

Dieser Ladevorgang respektive dieser Lademodus wird solange beibehalten, bis der Fahrer beispielsweise wieder beschleunigt, mithin also das Fahrpedal 10 betätigt wird, da dann ein Leistungswunsch anliegt, die Elektromaschine 5 wird entweder entkoppelt oder wieder in den Elektromotorbetrieb geschaltet, so dass die Lastpunktanhebung nicht mehr gegeben ist und die gewünschte Beschleunigung zur Verfügung steht.

Ist der Wechsel in den manuellen Schaltmodus seitens des Getriebesteuergeräts 7 nur temporär, was in der Regel dann der Fall ist, wenn über ein Lenkradschaltpaddel eine Gangstufe heruntergeschaltet wird, so kommt es nach Ablauf einer vorbestimmten Zeit, beispielsweise von zehn Sekunden, wieder zu einem Umschalten in den automatischen Schaltmodus. Wurde zuvor die Elektromaschine 5 in dem Generatorbetrieb geschaltet, so wird sie nach Ablauf dieser vorbestimmten Zeit wieder "zurückgeschaltet" oder entkoppelt, die Lastpunktanhebung wird wieder reduziert.

Handelt es sich bei dem Wählelement 8 jedoch um den Fahrstufenwählhebel, der in die manuelle "Tiptronic"-Gasse zur Seite bewegt wurde, so ist der Wechsel in den manuellen Schaltmodus (M-Fahrmodus) zeitlich nicht limitiert. D. h., dass der Lademodus, also der Generatorbetrieb der Elektromaschine 5, solange aktiv bleibt, wie der Wählhebel in der M-Stellung ist. Entsprechendes kann auch gelten, wenn der Fahrer, ohne Wechsel in die M-Schaltgasse, also die manuelle "Tiptronic"-Schaltgasse, von der D-Fahrstufe auf die S-Fahrstufe wechselt. Auch diese S-Fahrstufe kann dauerhaft eingelegt bleiben, ein automatischer Wechsel in die D-Fahrstufe findet nicht statt. Bleibt also der Fahrer mit dem Wählelement 8 in der S-Fahrstufenstellung, so kann der Lademodus für längere Zeit beibehalten werden, zumindest solange, bis das Fahrpedal nicht betätigt wird und eine entsprechende Leistung abgerufen wird, oder bis wieder in den D-Fahrmodus gewechselt wird. In der Zwischenzeit kann in den Schwach- und Teillastphasen dauerhaft die Lastpunktanhebung infolge eines Schaltens der Elektromaschine in den Generatorbetrieb beibehalten respektive durchgeführt werden.

## Patentansprüche

1. Verfahren zum Betrieb eines Kraftfahrzeugs mit Hybridantrieb umfassend einen Verbrennungsmotor (4) und eine Elektromaschine (5) mit zugeordnetem Energiespeicher (6), der in einem Lademodus bei generatorischem Betrieb der Elektromaschine (5) aufladbar ist, sowie ein elektronisch schaltbares Getriebe (2), dessen Gänge durch Betätigen eines Wählelements (8) manuell herauf- und herunterschaltbar sind,
**dadurch gekennzeichnet,**
**dass** die Elektromaschine in den Lademodus geschaltet wird, wenn über das Wählelement (8) durch wenigstens einmaliges Betätigen ein niedrigerer Gang oder ein infolge eines Gangwechsels zu einer höheren Drehzahl führender anderer Schaltmodus eines Getriebesteuergeräts (7) angewählt wird und nach erfolgter Gangwahl oder Schaltmoduswahl die Beschleunigung des Kraftfahrzeugs (1) durch Betätigung des Fahrpedals (10) nicht oder nur in einem vorbestimmten Maß geändert wird.

2. Verfahren nach Anspruch 1,
**dadurch gekennzeichnet,**
**dass** nach erfolgtem Schalten in den Lademodus bei einer Betätigung des Fahrpedals (10) zur Erwirkung einer Beschleunigung oder einer das vorbestimmte Maß übersteigenden Beschleunigung die Elektromaschine (5) in den Motorbetrieb geschaltet wird.

3. Verfahren nach Anspruch 1 oder 2,
**dadurch gekennzeichnet,**
**dass** für.ein Schalten der Elektromaschine (5) in den Lademodus das Wählelement (8) zweimal hintereinander zu betätigen ist, wobei ein Herunterschalten um einen weiteren Gang unterdrückt wird.

4. Verfahren nach Anspruch 3,
**dadurch gekennzeichnet,**
**dass** zusätzlich auch der Lastpunkt des Verbrennungsmotors (4) durch entsprechende Ansteuerung der im Lademodus als Generator betriebenen Elektromaschine (5) zum schnelleren Laden angehoben wird.

5. Verfahren nach einem der vorangehenden Ansprüche,
**dadurch gekennzeichnet,**
**dass** bei Betätigung des Wählelements (8) ein das Schalten der Gänge veranlassendes Getriebesteuergerät (7) von einem automatischen Schaltmodus in einen manuellen Schaltmodus wechselt, welcher Schaltmodus für eine vorbestimmte Zeit beibehalten wird, wonach ohne weitere Betätigung des Wählelements (8) ein erneuter Wechsel in den automatischen Schaltmodus erfolgt, wobei auch die Elektromaschine (5) nach Ablauf der vorbestimmten Zeit in den Motorbetrieb geschaltet wird.

6. Verfahren nach Anspruch 3 oder 4, und 5,
**dadurch gekennzeichnet,**
**dass** bei zweimaliger Betätigung des Wählelements (8) zum Schalten der Elektromaschine (5) eine längere vorbestimmte Zeit eingestellt wird, als bei nur einmaliger, nur zum Herunterschalten des Gangs ausreichendem Betätigen des Wählelements (8).

7. Verfahren nach Anspruch 5 oder 6,
**dadurch gekennzeichnet,**
**dass** die vorbestimmte Zeit wenigstens 20 s, vorzugsweise wenigstens 30 s, insbesondere wenigstens 60 s beträgt.

8. Kraftfahrzeug mit Hybridantrieb umfassend einen Verbrennungsmotor (4) und eine Elektromaschine (5) mit zugeordnetem Energiespeicher (6), der in einem Lademodus bei generatorischem Betrieb der Elektromaschine (5) aufladbar ist, sowie ein elektronisch schaltbares Getriebe (2), dessen Gänge durch Betätigen eines Wählelements (8) manuell herauf- und herunterschaltbar sind,
**dadurch gekennzeichnet,**
**dass** eine die Elektromaschine (5) in ihrer Funktion umschaltende Steuerungseinrichtung (9) vorgesehen ist, ausgebildet zur Durchführung des Verfahrens nach einem der vorangehenden Ansprüche.

## Claims

1. Method for operating a motor vehicle having a hybrid drive comprising an internal combustion engine (4) and an electric machine (5) with associated energy storage (6), which can be charged in a charging mode when the electric machine (5) is operated as a generator, and an electronically shiftable transmission (2), the gears of which can be manually shifted up or down by actuating a selector element (8),
**characterised in that**
the electric machine is switched into charging mode when a lower gear is selected by actuating the selector element (8) at least once or another shifting mode of a transmission control unit (7) leading to a higher rotational speed because of a gear change is selected and, after gear selection or shifting mode selection, the acceleration of the motor vehicle (1) is not changed or changed only to a predetermined degree by pressing the accelerator pedal (10).

2. Method according to Claim 1,
**characterised in that**
after switching into the charging mode, the electric machine (5) is switched into the engine mode when the accelerator pedal (10) is pressed to effect acceleration or acceleration exceeding the predetermined degree.

3. Method according to Claim 1 or 2,
**characterised in that**
the selector element (8) is actuated twice in succession to switch the electric machine (5) into the charging mode, wherein a shifting down by a further gear is suppressed.

4. Method according to Claim 3,
**characterised in that**
additionally also the load point of the internal combustion engine (4) is raised for faster charging by corresponding control of the electric machine (5) when said electric machine is operated as a generator in charging mode.

5. Method according to any one of the preceding claims,
**characterised in that**
a transmission control device (7), which effects a shifting of the gears, changes from an automatic shifting mode to a manual shifting mode in response to actuation of the selector element (8), which manual shifting mode is maintained for a predetermined period after which the transmission control device reverts to the automatic shifting mode in the absence of a further actuation of the selector element (8), wherein the electric machine (5) also switches into the engine mode after the predetermined period has expired.

6. Method according to Claim 3 or 4, and 5,
**characterised in that**
a longer predetermined period is set when the selector element (8) is actuated twice for switching the electric machine (5) than when the selector element (8) is actuated only once which is simply sufficient for shifting into a lower gear.

7. Method according to Claim 5 or 6,
**characterised in that** the predetermined period is at least 20 seconds, preferably at least 30 seconds, particularly preferably at least 60 seconds.

8. Motor vehicle,having a hybrid drive comprising an internal combustion engine (4) and an electric machine (5) with associated energy storage (6), which can be charged in a charging mode when the electric machine (5) is operated as a generator, and an electronically shiftable transmission (2), the gears of which can be manually shifted up or down by actuating a selector element (8), **characterised in that**
a control device (9) which switches the functions of the electric machine (5) is provided, said control device being configured to carry out the method according to any one of the preceding claims.

## Revendications

1. Procédé pour le fonctionnement d'un véhicule automobile à propulsion hybride comprenant un moteur à combustion (4) et un moteur électrique (5), pourvu d'un accumulateur d'énergie (6) associé, qui peut être chargé dans un mode de charge lors du fonctionnement en mode générateur du moteur électrique (5), ainsi qu'une boîte de vitesses (2) à commande électronique dont les rapports peuvent être changés vers un rapport supérieur et être rétrogradés manuellement par l'actionnement d'un sélecteur (8),
**caractérisé en ce**
**que** le moteur électrique est commuté dans le mode de charge lorsqu'un rapport inférieur ou un autre mode de commutation, conduisant à une vitesse de rotation supérieure suite à un changement de rapport, d'un appareil de commande de boîte de vitesses (7) est choisi par au moins un actionnement simple par l'intermédiaire du sélecteur (8), et une fois choix de rapport effectué ou le choix de mode de commutation effectué, l'accélération du véhicule automobile (1) n'est pas modifiée, ou n'est modifiée que dans une certaine mesure prédéterminée, par l'actionnement de la pédale d'accélération (10).

2. Procédé selon la revendication 1,
**caractérisé en ce**
**qu'**une fois la commutation effectuée dans le mode de charge, le moteur électrique (5) est commuté dans le mode moteur lors d'un actionnement de la pédale d'accélération (10) pour obtenir une accélération ou une accélération dépassant la mesure prédéterminée.

3. Procédé selon la revendication 1 ou 2,
**caractérisé en ce**
**que**, pour une commutation du moteur électrique (5) dans le mode de charge, le sélecteur (8) doit être actionné deux fois successivement, un rétrogradage d'un autre rapport étant empêché.

4. Procédé selon la revendication 3,
**caractérisé en ce**
**qu'**en supplément, le point de charge du moteur à combustion (4) est également relevé par une commande correspondante du moteur électrique (5) fonctionnant en tant que générateur dans le mode de charge pour une charge plus rapide.

5. Procédé selon l'une quelconque des revendications précédentes,
**caractérisé en ce**
**que**, lors de l'actionnement du sélecteur (8), un appareil de commande de boîte de vitesses (7) provoquant la commutation des rapports passe d'un mode de commutation automatique à un mode de commutation manuel, lequel mode de commutation est conservé pendant un certain temps prédéterminé, après quoi un nouveau changement vers le mode de commutation automatique est effectué sans nouvel actionnement du sélecteur (8), le moteur électrique (5) étant également commuté dans le mode moteur une fois le temps prédéterminé écoulé.

6. Procédé selon les revendications 3 ou 4, et 5,
**caractérisé en ce**
**que**, lors d'un double actionnement du sélecteur (8) pour la commutation du moteur électrique (5), un temps prédéterminé plus long est réglé que lors d'un seul simple actionnement du sélecteur (8) suffisant seulement pour rétrograder le rapport.

7. Procédé selon la revendication 5 ou 6,
**caractérisé en ce que** le temps prédéterminé est égal au moins à 20 s, de préférence au moins à 30 s, en particulier au moins à 60 s.

8. Véhicule automobile à propulsion hybride, comprenant un moteur à combustion (4) et un moteur électrique (5) pourvu d'un accumulateur d'énergie (6) associé, qui peut être chargé dans un mode de charge lors du fonctionnement en mode générateur du moteur électrique (5), ainsi qu'une boîte de vitesses (2) à commande électronique, dont les rapports peuvent être changés vers un rapport supérieur et être rétrogradés manuellement par l'actionnement d'un sélecteur (8), **caractérisé en ce**
**qu'**est prévu un dispositif de commande (9) commutant le moteur électrique (5) dans sa fonction, lequel est réalisé aux fins de la mise en oeuvre du procédé selon l'une quelconque des revendications précédentes.
